# EUROPEAN PATENT APPLICATION

(11) **EP 1 435 598 A2**
(43) Date of publication of application: **07.07.2004**
(21) Application number: 03028511.8
(22) Date of filing: 10.12.2003
(51) Int. Cl.: G07F 17/00

(54) **Gaming machine**

(30) Priority: 13.12.2002 JP 2002362211
(71) Applicant: Aruze Corp., Tokyo 135-0063 (JP)
(72) Inventor: Shinoda, Tomohiro, Tokyo, 135-0063 (JP)
(74) Representative: Urner, Peter, Dipl.-Phys.

(57) **Abstract**

A gaming machine provided with data reading means for reading character data from at least one inserted trading card; and payout means for paying out at least one reward trading card, wherein the at least one reward trading card stores updated character data on a basis of both a status of a game and the character data read by the data reading means. A game player has a sense of attachment to the trading cards, and a desire for collection of trading cards is brought in playing games.

## Description

### Field of the Invention

The present invention relates to a gaming machine for providing a game using trading cards in which character data relating to the characters are stored.

### Related Art

Conventionally, trading cards are cards in which athletes, characters of animation movies, etc., are depicted, and are enthusiastically collected by fans. And trading cards which have been proposed recently are used for face-to-face type games and providing particular game characteristic. These trading cards are not only collected by fans but also are used for playing a game on the basis of various types of information described on the trading cards.

Recently, gaming machines using trading cards have become popular. In such trading cards, character data of characters which appear in games are stored. And a gaming machine reads the character data from the trading cards and advances the status of a game. Japanese Unexamined Patent Publication No. H11-244537 discloses an example of such a gaming machine. This gaming machine is capable of rewriting the character data stored in the trading cards in response to an advancing status of the game. Also, Japanese Unexamined Patent Publication No. 2002-301264 discloses a gaming machine capable of reading character data from the trading cards arranged on a disposing table of a terminal unit and capable of advancing the game using the character data.

Some of above mentioned gaming machines pay out new trading cards as a reward when a game is over. And many game players favorably support such gaming machines since trading cards can be collected through games.

However, since the trading cards are paid out by the above described gaming machine merely as a reward when a game is over, there is no game characteristic in the process of acquiring new trading cards. And the inherent interest of trading cards, which is to collect trading cards, differs from the game. Therefore, there was a problem in that the inherent interest of trading cards cannot be sufficiently reflected in the game.

Since trading cards which are newly paid out have no relationship with the trading cards used for advancement of the game, the game player does not sufficiently have a sense of attachment to the newly acquired trading cards.

In addition, a game player, having trading cards relating to characters with high capability value, tends not to use trading cards relating to characters with low capability value in order to take the advantage of games. Therefore, if a newly paid out card is relating to characters with low capability value, the newly paid out card will not be used in subsequent games.

In particular, trading cards relating to characters with low capability value does not have only a low utility value in the game but also a low exchange value on the trading cards among game players. Therefore, there is another problem in that a game player will have a sense of irritation or discomfort sense against the cards paid out as a reward.

The present invention was developed in view of the above-described problems, and an object of the present invention is to provide a gaming machine capable of achieving fusion of inherent interest of trading cards and game interest, to bring a new value which does not exist in conventional gaming machines, to cause a game player to have a sense of attachment to the trading cards, and to cause the game player to have fun with the game while arousing a desire in the collection of trading cards.

### SUMMARY OF THE INVENTION

In order to achieve the above-described object, the present invention provides a gaming machine characterized in that one or a plurality of trading cards, in which character data relating to one or a plurality of characters are stored, is or are paid out on the basis of one of a plurality of character data read from a trading card and an advancing status of the game.

According to the present invention the following may be provided.
(1) A gaming machine comprising: data reading means for reading character data from at least one inserted trading card; and payout means for paying out at least one reward trading card, wherein the at least one reward trading card stores updated character data on a basis of both a status of a game and the character data read by the data reading means.
   According to the present invention (1), since a status of a inserted trading card held by a game player and an advancing status of the game are related to the process of acquiring a reward trading card, the inherent interest of a trading card can be adopted into the game. The inherent interest of trading cards and fun of the game can be fused. It is possible to provide a gaming machine that merges the inherent interest of a trading card and fun of the game.
   In addition, a newly paid out trading card reflects the game player's trading card at the time of and the status of the game. For example, reward trading cards relating to a still stronger character C are paid out on the basis of a inserted trading card relating to the character A and a inserted trading card relating to the character B. And it is possible to cause the game player to feel as if he is growing the trading card. As a result, the game player is able to feel a sense of attachment to the newly acquired trading card and become absorbed with the game.
   Also, since the trading card have a value not only the value as exchanging materials among game players and value in a game but also the value as a creating material to receive a new trading card. Even a trading card having less value to a game player, such as a trading card relating to a character with low capability value, and those which are doubly held by the game player, have a new utility value. As a result, it is prevented that a trading card with low value are not used. And the game player will be free from any sense of irritation and discomfort even if a trading card with low value is paid out or purchased. And the game player can have a motivation for a game.
   Further, the present invention provides the following.
(2) The gaming machine according to (1), wherein the payout means pays out the at least one inserted trading card as the at least one reward trading card.
   Further, the present invention provides the following.
(3) The gaming machine according to (1) or (2), wherein the payout means includes writing means for writing the updated character data in the at least one reward trading card.
   According to the invention (3), since there is no need to accommodate various types of trading cards in a gaming machine, it is possible to reduce labor and time in supplying trading cards, and the gaming machine itself can be made small-sized.
   Further, the present invention provides the following.
(4) The gaming machine according to (1), further comprising; selecting means for selecting the at least one reward trading card among a plurality of trading cards stocked in the gaming machine.
   According to the invention (4), it becomes possible to quickly pay out trading cards since the trading card having character data stored in advance therein are selected paid out. Further, since character data are not written in the trading cards which will be newly paid out in the gaming machine, for example, a packaged trading card or a brand-new trading card can be paid out, and the degree of satisfaction of a game player can be increased.
(5) The gaming machine according to any one of (1) to (4), wherein the character data includes capability and attribute values.
   Further, the present invention provides the following:
(6) The gaming machine according to any one of (1) to (5), wherein the payout means includes printing means for printing an image on a surface of the at least one reward trading card.
   According to the invention (6), since it becomes possible to print images on the surface of a trading card as a reward trading card, it is possible to decorate the trading card with image corresponding to the character data. Therefore, the trading card on which specified character data are written can be distinguished from other cards by the appearance thereof. Accordingly, it is possible to increase the degree of satisfaction of a game player who holds a trading card having specified character data written thereon.
   Further, the present invention provides the following.
(7) A gaming machine comprising: a card reader which reads character data from at least one inserted trading card; a card writer which writes updated character data on at least one reward trading card; and a controller which executes a predetermined computer program, the controller being connected to the card reader and the card writer, wherein the controller causes the card reader to read the character data from the at least one inserted trading card, causes a game to advance on a basis of the character data read by the card reader, and causes the card writer to write the updated character data on a basis of both a status of the game and the character data read by the card reader.
(8) A method for controlling a gaming machine including a card reader and a card writer, comprising: reading character data from at least one inserted trading card; advancing a game based on the character data; and writing updated character data to at least one reward trading card, the updated character data being on a basis of both a status of the game and the read character data.

A gaming machine according to the present invention includes, for example, arcade gaming machines which are installed in so-called game arcade, home-use gaming machines, and portable gaming machines, etc. Also, the above-described gaming machines can be configured so that a game can be enjoyed by a plurality of game players at the same time, and further so that the same gaming machine can be connected to another gaming machine via a computer network, wherein various types of data can be transmitted and received.

Also, where the present invention is applied to a home-use gaming machine or a portable gaming machine, it is preferable that the gaming machine is provided with the above-described writing means since even if various types of trading cards are not accommodated in the corresponding gaming machine, it becomes possible to pay out new trading cards.

The trading card according to the present invention is not especially limited to a particular type of card as long as the card is capable of holding character data relating to a character. For example, a card provided with magnetic stripes and IC cards may be used as the trading card according to the present invention. In addition, where the IC cards are used as the trading cards according to the present invention, the IC cards may be either a contact type or non-contact type. A transponder, etc., which is used in the Radio Frequency Identification (RFID) system known in the art, may be listed as the non-contact type IC card. Further, with the present invention, a trading card having a pattern relating to character data formed on the surface thereof so as to be optically distinguishable may be used.

A gaming machine according to the present invention is provided with reading means corresponding to the types of the trading cards as described above. Such reading means is not especially limited to a particular type. For example, where trading cards having a pattern relating to character data formed on the surface thereof so as to be optically distinguishable are used, any known art may be used, for example, an image sensor may be used as the reading means. Further, in order to enable addition and alteration of character data stored in the trading card, a gaming machine according to the present invention may include rewriting means for renewing and rewriting updated character data in trading card according to a status change of a game.

Also, as described above, although the contents (for example, the appearance of a character, capability value of thereof, etc.) of the character data stored in a trading card is depicted on the surface of the corresponding trading card, a rewritable card in which deletion and printing of the contents of the character can be repeatedly carried out may be used as the trading card according to the present invention. Also, the rewritable card, printing process and deleting process according to the rewritable card belong to the well-known art and will not be discussed in further detail. In addition, where deletion and printing of the contents of character data are repeatedly carried out, for example, a method for printing the contents of character data using toners whose color can be extinguished by irradiating ultraviolet rays, and a method for physically or chemically peeling off only toners printed on the trading card may be utilized. Other features and advantages of the present invention will be apparent from the following description taken in connection with the accompanying drawings.

### BRIEF DESCRIPTION OF THE DRAWINGS

Fig. 1 is a perspective view showing an example of a gaming machine according to the present invention;
Fig. 2A is a block diagram showing an internal construction of the main body of the gaming machine shown in Fig. 1;
Fig. 2B is a block diagram showing an internal construction of a satellite device of the corresponding gaming machine;
Fig. 3A is a perspective view showing an example of trading cards according to the present invention;
Fig. 3B is a partially enlarged sectional view thereof;
Fig. 4 is a view showing a part of an example of a table showing character data of a character appearing in a game;
Fig. 5 is a flowchart showing a subroutine relating to a combining process that is carried out in the satellite device;
Fig. 6 is a view showing a part of an example of a table showing the relationship between two original character data and updated character data; and
Fig. 7 is an exemplary view showing a trading card in which original character data are stored and a trading card in which updated character data are stored.

### PREFERRED EMBODIMENT OF THE INVENTION

A description is given of an embodiment of a gaming machine according to the present invention is described with reference to the accompanying drawings. Hereinafter, an arcade gaming machine is described as a preferred example.

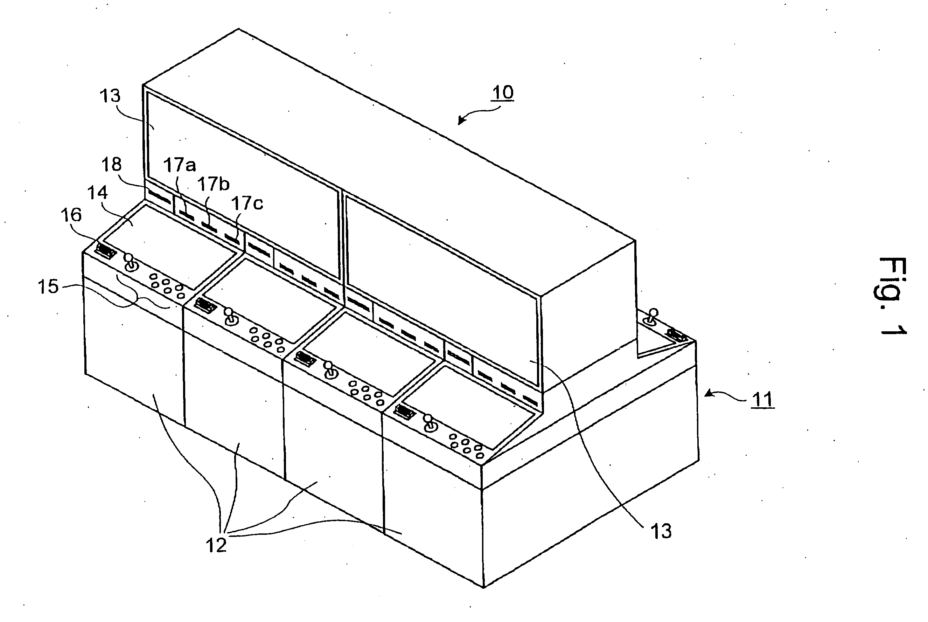

Fig. 1 is a perspective view showing an example of a gaming machine according to the present invention. In the gaming machine shown in Fig 1, a transponder of the Radio Frequency Identification (RFID) system is used as a trading card interface. A trading card in this example is a rewritable card and the data stored in this card can be updated. Also a picture of character image depicted on this card can be deleted and printed repeatedly.

The gaming machine 10 is provided with the main body 11 consisting of eight satellite devices 12 in total, in which four units are disposed at one side and another four units are disposed at the opposed side. With the gaming machine 10, eight persons can simultaneously play a game at the maximum. Large-sized monitor displays 13 are placed between the four satellite devices 12 disposed at one side and the four satellite devices 12 disposed at the other side, which display the status of a game.

On the top side of the satellite devices 12 are installed the monitor 14 for displaying images related to the game, the control section 15 operated by a game player, and the coin input slot 16 through which coins necessary to execute a game are inputted. Also, the three trading card (TC) slots 17a through 17c, and MC (memory card) insertion port 18 are provided at the opposite side thereof. In addition, although both the memory cards and trading cards are used in the gaming machine 10, data relating to the history of games of a game player are stored in the memory cards. Therefore, the memory cards are different from the trading cards in which character data are stored.

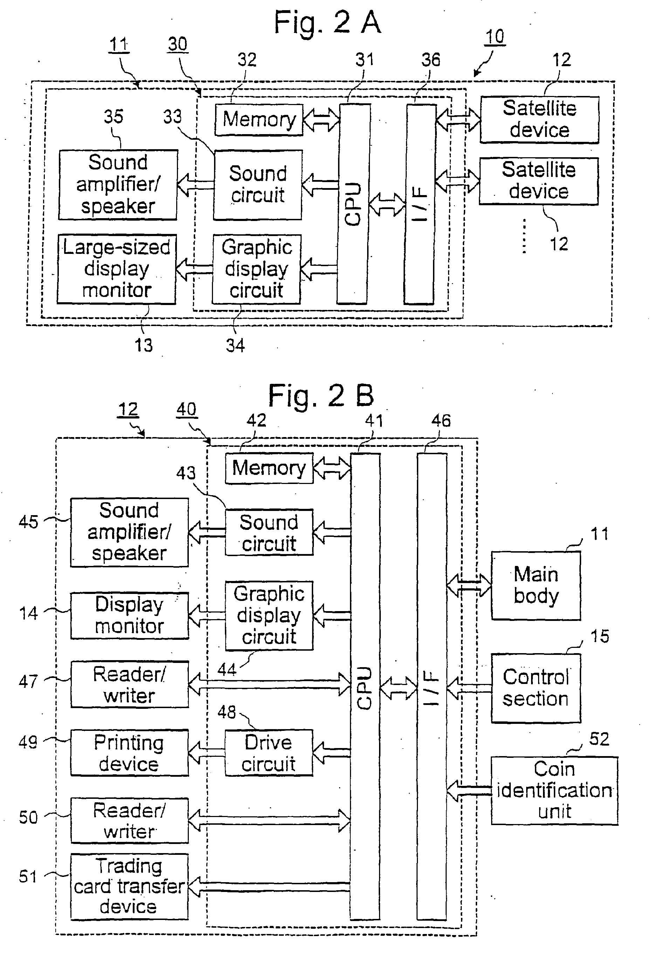

Fig. 2A is a block diagram showing an inner construction of the main body 11 of the gaming machine 10. Fig. 2B is a block diagram showing an inner construction of the satellite device 12 of the gaming machine 10.

As shown in Fig. 2A, the main body 11 of the gaming machine 10 is internally provided with the main controller 30. The main controller 30 includes a central processing unit (CPU) 31, a memory (RAM) 32, a sound circuit 33, and a graphic display circuit 34. Also, the CPU 31 is connected to the eight satellite devices 12 via an interface circuit 36.

In the memory 32, various types of image data to be displayed on the large-sized display monitor 13 and control programs, etc are stored. The sound circuit 33 is connected to a sound amplifier 35 for outputting sounds corresponding to various types of images displayed on the large-sized display monitor 13. The graphic display circuit 34 causes images, which are selected by control signals from the CPU 31, to be displayed on the large-sized display monitor 13.

As shown in Fig. 2B, the satellite device12 is provided with a controller 40. The controller 40 includes a CPU 41, a memory 42, a sound circuit 43, a graphic display circuit 44 and a drive circuit 48. Also, it is connected to the main body 11 and the control section 15 via an interface circuit. The CPU 41 is capable of receiving various types of data and programs from the main body via the interface circuit 46 and receiving instruction signals supplied by the control section 15 on game player's operation.

In addition, a coin identification device 52 is connected to the CPU 41 via the interface circuit 46. If the coin identification device 52 detects coins inputted into the coin insertion slot 16, it issues a detection signals to the CPU 41.

The sound circuit 43 is connected to a sound amplifier 45 that outputs sounds corresponding to various types of images displayed on the display monitor 14. The graphic display circuit 44 displays images, which are selected by control signals from the CPU 41, on the display monitor 26.

A reader/writer (R/W) 47 is connected to the CPU 41. When the reader/writer 47 reads data from a memory card inserted into the MC insertion port 18, it writes another piece of data in the corresponding memory card. In addition, another reader/writer (R/W) 50 is connected to the CPU 41. By transmitting instruction signals to the trading cards inserted into the trading card slots 17a through 17c and receiving response signals from the corresponding trading cards, the reader/writer 50 writes character data (updated character data) in the trading cards and reads character data from the trading cards. That is, the reader/writer 50 functions as a card writer for writing updated character data in trading cards and as a card reader for reading character data from the trading cards.

The CPU 41 functions as a controller that carries out advancement of a game and controls the peripheral devices connected to the CPU 41 in compliance with computer programs stored in the memory 42.

Also, a printing device 49 as printing means is connected to the drive circuit 48. The printing device 49 carries out printing and deletion of character data depicted on the surface of trading cards according to control signals from the CPU 41. That is, the printing device 49 prints the contents of character data on the surface of trading cards by irradiating light onto the surface of the trading cards with a pattern corresponding to the contents of the character data. On the other hand, the printing device 49 deletes the contents of the character data printed on the surface of the trading cards by applying a heating process onto the surface of the trading cards at a specified temperature.

Further, a trading-card-transfer device 51 is connected to the CPU 40. The trading-card-transfer device 51 transfers and accommodates the trading cards taken in the satellite devices 12 and those to be paid out, upon receiving control signals from the CPU 41.

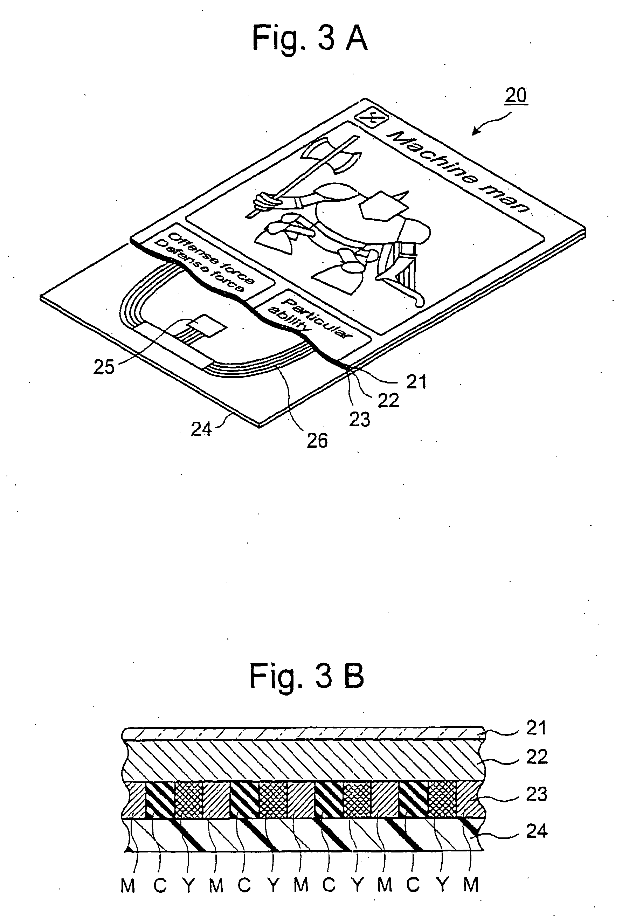

Next, a trading card used for the gaming machine 10 is described. Fig. 3A is a perspective view showing an example of a trading card relating to the present invention, and Fig. 3B is a partially enlarged sectional view thereof. Also, Fig. 3A shows a trading card with a part thereof illustrated in section for convenience of description. The trading card is used as a inserted trading card when the card is inserted in to the gaming machine and as a reward trading card when the card is paid out by the gaming machine.

The trading card 20 is, as shown in Fig. 3A, composed of a coloring layer 23, a rewritable layer 22 and a transparent protection layer 21 which are laminated on the upper side of a rectangular substrate 24. The trading card 20 holds various data. A single chip 25 is buried between the coloring layer 23 and the substrate 24, and simultaneously an antenna 26 for transmitting and receiving electric waves is printed. The single chip 25 includes a transmitting and receiving circuit, a controlling circuit and a memory. It receives instruction signals issued from the reader/writer 50 to generate power, wherein character data stored in the memory are rewritten, and the character data are transmitted as response waves,

The coloring layer 23 is composed of a number of minute pixels consisting of magenta (M), cyan (C) and yellow (Y) as shown in Fig. 3B. The rewritable layer 22 reversibly changes to be transparent and non-transparent by applying a heating process at a specified temperature. If the entire surface of a trading card is subjected to a heating process at a specified temperature by the printing device 49, the entire surface of the rewritable layer 22 is made transparent, wherein the entire surface of the trading card 20 is made black which is a mixed color of magenta, cyan and yellow. The contents of the character data printed on the surface of the trading card 20 can be deleted. On the other hand, if light is irradiated with a pattern corresponding to the contents of the character data by the printing device 49, the rewritable layer 22 is selectively made non-transparent, and the contents of the character data appear on the surface of the trading card. It is thereby possible to print the contents of the character data on the surface of the trading card 20.

Hereinafter, a method for executing a game by the gaming machine 10 and the contents of a game by the gaming machine 10 is described.

### (A) Procedures for commencement of game

First, a game player is required to acquire a memory card before commencing the game. The method for providing a memory card to the game player is not especially limited. For example, a memory card may be sold at the counter of a game arcade or may be paid out from the gaming machine 10 upon receiving a fixed amount of coins inputted. The above-described memory card, for example, includes a semiconductor memory such as a flash memory, etc., and stores the history of a game (for example, capability value, etc., of a main character controlled by a game player). The game player inputs a fixed amount of coins into the coin insertion slot 16 and inserts the above-described memory card into the MC insertion port 18, whereby the game player is able to commence a game.

### (B) Overview of a game

A game provided by the gaming machine 10 is available by inserting a trading card (inserted trading card) into the trading card slot 17 installed in the satellite device 12. In this game, characters appear in a virtual world, and a main character controlled by the game player plays out an adventure for the purpose of collecting "small medals" scattered in the virtual world. Since three trading card slots 17 are installed in the satellite device 12, it is possible for the game player to have an adventure with accompanying three characters at the same time. In addition, the virtual world is common to all of the eight satellite devices 12, and, if a main character controlled by one game player encounters another main character controlled by another game player in the above-described virtual world, a battle is commenced between both main characters.

"Small medals" can be acquired if a main character wins a battle with a monster living the virtual world or wins a battle with another main character controlled by another game player. If collected medals are brought to a prescribed place in the virtual world, another character can be acquired corresponding to the types and quantity of medals. And a trading card (reward trading card) having the character data relating to the character stored therein is paid out through the trading card slot 17 installed at the satellite device 12. For example, if a game player has a number of medals or a medal of scarcity value, a trading card for a character with high capability value will be paid out. As a result, since the main character can have an adventure while accompanying a further stronger character, the main character can advantageously carry out the game. And it becomes possible to collect trading cards of further higher capability value or those of scarcity value.

Further, it is possible to increase the capability values of main characters and other characters by, for example, accumulating experiences through adventures by winning a battle with a monster living in the virtual world or a battle with characters controlled by other game players. The capability values are stored in the memory card as a history of the game and stored in trading cards as character data.

### (C) Combining of characters

In a game of the gaming machine 10, if a main character travels to a prescribed place in the virtual world, a trading card in which character data (hereinafter called "updated character data") relating to the character data (hereinafter called "original character data") is stored, will be paid out. The updated character data in the paid out trading card is based on the original character data read from a trading card by the reader/writer 50 and advancing status of the game.

First, character data is described.

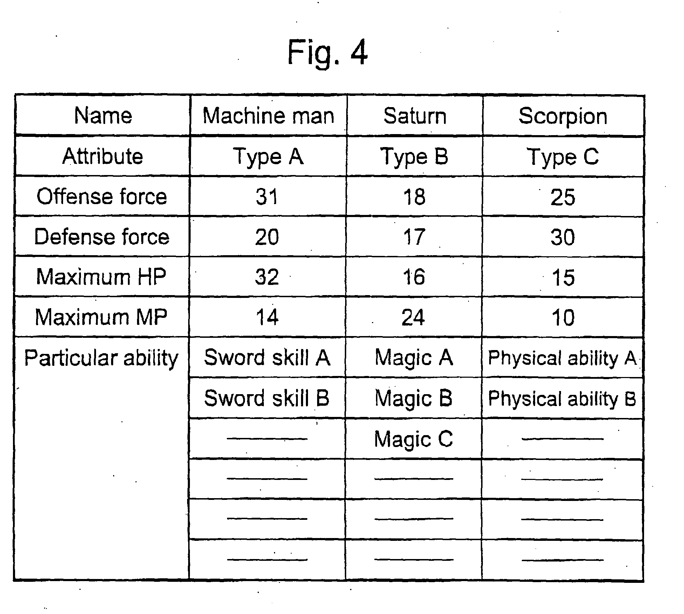

Fig. 4 is a view showing a part of a table for which character data of characters appearing in the game. The table indicates the initial character data of characters. The table is stored in the memory 32 of the main body 11 and the memory 42 of the respective satellite devices 12. A Name, attribute, offense force, defense force, maximum health point (physical power), maximum magic point (magical power) and special ability are shown from the uppermost column. The offense force, defense force, maximum health point and maximum magic point are capability values of characters. The characters become stronger as these capability values become higher. The special ability is, for example, skill or magic. If these skills and magic are used, a battle can be advantageously carried out. In addition, the attribute shows a type and species. For example, a character of type A has a higher offense force and defense force, and the character of the same type has common features so that it acquires a "sword skill" in line with progress of the capability value.

In the example shown in Fig. 4, the attribute of "machine man" is type A, and the machine man has sword skills A and B as special ability. The attribute of "Saturn" is type B and Saturn has magic A, B and C as special ability. The attribute of "Scorpion" is type C, which has physical abilities A and B as special ability.

Next, a combining process is described. The combining process is carried out to pay out one or a plurality of reward trading cards on the basis of one or a plurality of original character data and a status of the game.

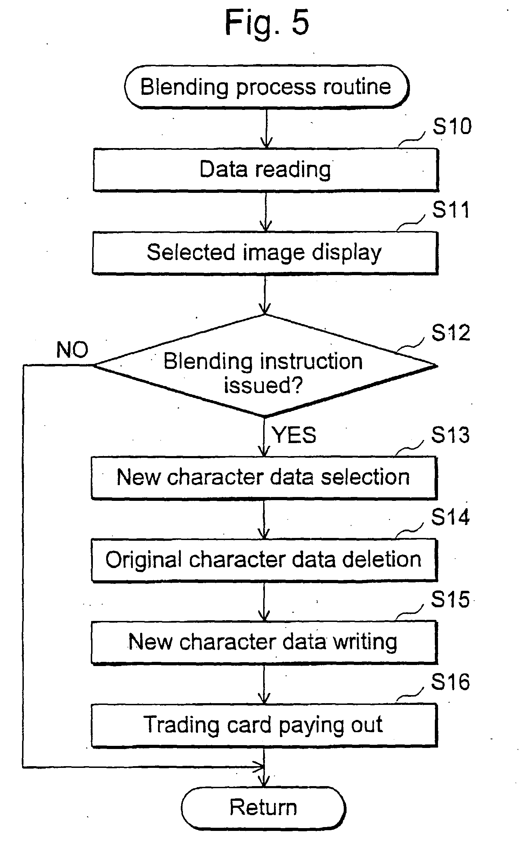

Fig. 5 is a flowchart showing a subroutine relating to a combining process that is carried out in the satellite devices 12 upon receiving the prescribed conditions (for example, a condition of the main character having arrived at a prescribed place in the virtual world) in a game are satisfied.

First, the CPU 41 executes a reading process of character data from the trading card inserted into the trading card slot 17 (Step S10). That is, by transmitting a control signal to the reader/writer 50, the CPU 41 causes the reader/writer 50 to carry out transmission of instruction signals to the trading card inserted into the trading card slot 17 and receiving of a response signal generated from the trading card. The response signal includes character data. As a result, the original character data are read from the trading card inserted into the trading card slot 17, and the character data are stored in the memory 42, At this time, the controller 40 and reader/writer 50 function as means for reading the character data from the trading card.

Since the gaming machine is provided with three trading card slots 17, it is possible to read character data from three inserted trading cards at the same time. Although not being illustrated, in Step S10, where no trading card is inserted in the trading card slot 17, an image for urging a game player to insert a trading card into the trading card slots 17 may be displayed on the display monitor 14 from the trading card, for example.

Next, the CPU 41 reads various types of required image data from the memory 42 on the basis of the character data stored in the memory 42, and executes a process for displaying the selected image on the display monitor 14 (Step S11) via the graphic display circuit 44. The selected image is an image for urging a game player to select which character data are made into the original character data. For example, in Step S10, where character data are read from three inserted trading cards, an image showing three character data is displayed on the display monitor 14 as the above-described selected image.

Next, the CPU 41 determines whether or not an instruction for combining is inputted (Step S12). That is, the CPU 41 determines, by controlling the control section 15 according to the operating procedures in the above-described selected image, whether or not an instruction signal supplied by the control section 15 is received. The instruction signal includes an instruction for selecting whether or not characters are combined, and an instruction for selecting which characters are combined.

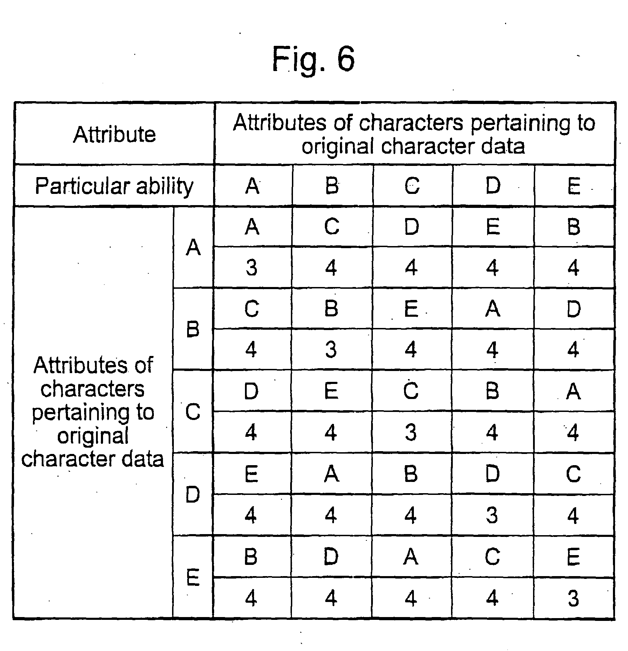

In Step S12, if determined as no combining instruction provided, the present subroutine is terminated, and the game advances without combining the characters, On the other hand, in Step S12, if determined as a combining instruction provided, the CPU 41 executes a process for determining updated character data on the basis of one or a plurality of instructed original character data and the advancing status of the game (Step S13). The process in Step S13 is carried out on the basis of, for example, the table shown in Fig. 6.

Fig. 6 is a table showing the relationship between two original character data and one updated character data, which are stored in the memory 32 of the main body 11 and the memory 42 of the respective satellite devices 12. The most upper line and most left column of the table show the attributes of the original character data. The attributes of updated character data and number of special abilities succeeded from the original character data are shown at the middle portion of the table.

For example, where the original character data of types A and B are selected, the updated character data become the character data of type C, wherein four special abilities of the special abilities included in the original character data of types A and B will be included in the updated character data. Also, the initial character data shown in Fig. 4 are used as the capability value of the updated character data. The character data thus determined are stored in the memory 42, etc., of the satellite device 12,

Next, the CPU 41 transmits a control signal to the reader/writer 50, and executes a process for deleting the original character data stored in the trading card as a reward trading card inserted into the trading card slot 17. At the same time, the CPU 41 transmits a control signal to the printing device 49 and executes a process for deleting the contents of the original character data printed on the surface of the corresponding trading card (Step S14). The trading card in which the original character data are deleted is accommodated in a prescribed position of the main body 11 or satellite device 12 by the trading-card-transfer device 51 which is actuated by a control signal from the CPU 41. In addition, in Step S15 described later, updated character data may be written in the trading card, in which the original character data are deleted, without transferring the trading card to a prescribed position by the trading-card-transfer device 51.

Next, the CPU 41 executes a process for writing updated character data in the trading card by transmitting a control signal to the reader/writer 50, and at the same time, executes a process of printing the contents of the updated character data on the corresponding trading card by transmitting a control signal to the printing device 49 (Step S15). The inserted trading card processed in Step S14 may be used as the reward trading cards in which updated character data are written. Alternatively, the trading cards which are stocked in advance in a prescribed position of the main body 11 or the satellite device 12 may be used.

At this time, the controller 40 and reader/writer 50 function as writing means and storing means for writing and storing updated character data in reward trading cards which will be newly paid out.

Next, the CPU 41 executes a process for paying out trading cards, in which the updated character data are stored, from the trading card slot 17 (Step S16). The present subroutine is terminated afterwards. As a result, a game player will be able to acquire the trading cards in which updated character data related to the original character data are stored.

When the subroutine shown in Fig. 6 is being carried out, the controller 40, printing device 49, reader/writer 50 and trading-card-transfer device 51 function as payout means for paying out one or a plurality of trading cards, in which character data related to one or a plurality of original character data are stored, on the basis of the corresponding one or plurality of original character data and the status of the game.

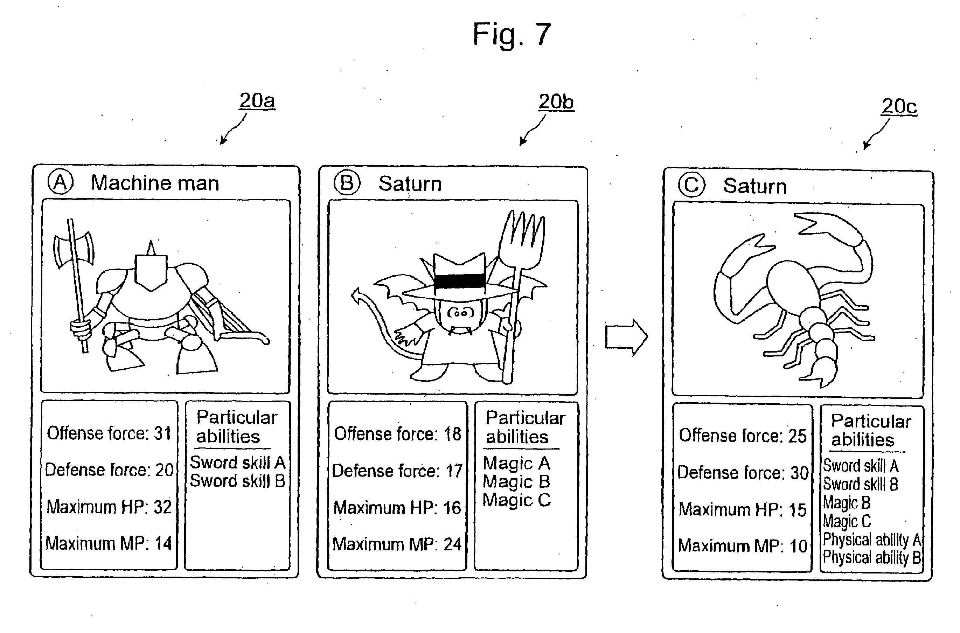

Fig. 7 is a view showing trading cards in which original character data are stored and a trading card in which updated character data are stored.

The trading cards 20a and 20b are inserted trading cards in which original character data are stored, and a trading card 20c is a reward trading card in which updated character data are stored.

The attribute [Type C] of the updated character data stored in the trading card 20c is determined by the table shown in Fig. 6 on the basis of the attributes [Type A] and [Type B] of the original character data. And the capability value of the updated character data is determined by the table shown in Fig. 4. In addition, [Sword skill A], [Sword skill B], [Magic A], and [Magic B] of [Special Abilities] (Particular abilities) of the updated character data stored in the trading card 20c are determined by the table shown in Fig. 6 on the basis of particular abilities [Sword skill A] and [Sword skill B] of the original character data stored in the trading card 20a and particular abilities [Magic A], [Magic B] and [Magic C] of the original character data stored in the trading card 20b. Also, [Physical ability A] and [Physical ability B] are determined by the table shown in Fig. 4.

Thus, the attributes of characters relating to updated character data are defined on the basis of the attributes of the original character data, and the particular abilities of characters relating to the updated character data are succeeded as particular abilities of characters relating to original character data. Therefore, it is possible to let a game player sense that he or she causes the trading cards to grow. As a result, the game player will experience a sense of attachment to the trading cards that he or she newly acquires, and will become absorbed with the game.

Also, since the trading cards in which original character data are stored and the advancing status of a game are related to the process of acquiring trading cards in which updated character data are stored, a game player can enjoy collecting trading cards in a game and can enjoy playing a game, which cannot be provided by any related arts, wherein the game player can enjoy the game by fusion the collection of trading cards and the game itself.

Further, for example, where a certain game player doubly holds the same trading cards 20a and where the capability values of characters relating to the trading cards 20b are low and such trading cards are not used for games, with the gaming machine 10, a game player is able to acquire new trading cards 20c by using the trading cards 20a and/or 20b even if the trading cards 20a and/or 20b have less value to the game player. That is, according to the gaming machine 10, trading cards are caused to have values as creating materials to receive a pay out of new trading cards other than a conventional value as an exchange material among game players and value for the conventional games. As a result, a possibility that trading cards having low capability values are not used becomes low. Even if the capability values of characters relating to the trading cards paid out according to a status of a game and capability values of separately purchased trading cards are low, the game player will be free from any sense of irritation and discomfort. And it becomes possible to provide game players with novel motivation or eagerness for a game.

In the above-described example, a description has been given of a case where one trading card having updated character data stored therein is paid out from two original character data. However, in the present invention, there is no special limit in the number of original character data and updated character data (the number of trading cards which will be newly paid out), and it is not necessary that the above-described numbers are fixed at all times. For example, it is possible to change the number of original character data and number of updated character data in response to advancement of a game so that, at the beginning of the game, one trading card having updated character data stored therein is paid out from two original character data, and at the end of the game, two trading cards having updated character data stored therein are paid out from three original character data. In addition, a game player may select the number of original character data and the number of updated character data.

In the present invention, the entirety of updated character data may be determined on the basis of the entirety of original character data, or the entirety of updated character data may be determined on the basis of a part of original character data. A part of updated character data may be determined on the basis of the entirety of original character data. Further, the entirety of updated character data may be related to the entirety of original character data, a part of updated character data may be related to the entirety of original character data, or the entirety of updated character data may be related to a part of original character data.

Also, the present invention is not limited with particular basis for determination of updated character data, which data of various types of data that compose the original character data. And the present invention is not limited with relation with particular types of data. In the above-described example, the attributes and particular abilities of characters relating to updated character data are determined by the table shown in Fig. 6, and the capability values of characters relating to updated character data are determined by the table shown in Fig. 4. However, for example, updated character data may be determined by calculations based on original character data so that the average value of the capability values of characters relating to original character data is made into the capability value of characters relating to updated character data.

In the present invention, it may be devised that, for example, trading cards having updated character data stored therein are not able to be purchased or acquired by winning a battle with a monster in a virtual world, whereby the trading cards having updated character data stored therein are caused to have a scarcity value, and the values of trading cards can be discriminated in response to courses of acquisition. Therefore, a desire for collecting trading cards can be more increased, wherein game players are caused to be further adsorbed in games.

Also, in the above-described example, a description was given of a gaming machine provided with writing means for writing character data in trading cards which will be newly paid out, However, in the present invention, it is preferable that the gaming machine is provided with means for selecting trading cards, which are newly paid out, from a plurality of trading cards having character data stocked in advance therein. For example, various types of trading cards having character data stored therein are accommodated in a gaming machine so that the corresponding character data can be discriminated from each other, and trading cards having updated character data stored therein may be selected therefrom and paid out when newly paying out trading cards as reward trading cards.

According to the present invention, since trading cards with the game players at the time and the status of a game can be related to the progress of acquiring trading cards, the action of collecting trading cards can be brought into a game, and a game which is not conventionally provided by any related arts can be proposed, in which inherent interest of trading cards and a game are integrated.

In addition, since newly paid out trading cards are related to the trading cards held by a game player at the time of and the status of a game, it is possible to give the game player a sense that he or she is growing the trading cards. As a result, the game player is able to experience a sense of attachment to the newly acquired trading cards, and become further absorbed with the game.

Further, since trading cards are caused to have values as creating materials to receive paying out of new trading cards other than a value as an exchange material among game players who conventionally have trading cards and a value in games. For example, even if the trading cards are those which have less value to a game player such as those relating to characters with low capability value or those when a game player doubly holds the same trading cards, the trading values can be given new values. As a result, a possibility that trading cards having low capability values are not used becomes low, and even if the capability values of characters relating to the trading cards paid out during advancement of a game and capability values separately purchased trading cards are low, the game player will be free from any sense of irritation and discomfort, wherein it becomes possible to provide game players with novel motivation or eagerness of a game.

## Claims

1. A gaming machine comprising:
data reading means for reading character data from at least one inserted trading card; and
payout means for paying out at least one reward trading card,
wherein the at least one reward trading card stores updated character data on a basis of both a status of a game and the character data read by the data reading means.

2. The gaming machine according to claim 1, wherein the payout means pays out the at least one inserted trading card as the at least one reward trading card.

3. The gaming machine according to claim 1 or 2, wherein the payout means includes writing means for writing the updated character data in the at least one reward trading card.

4. The gaming machine according to claim 1, further comprising: selecting means for selecting the at least one reward trading card among a plurality of trading cards stocked in the gaming machine.

5. The gaming machine according to any one of claims 1 to 4, wherein the character data includes capability and attribute values.

6. The gaming machine according to any one of claims 1 to 5, wherein the payout means includes printing means for printing an image on a surface of the at least one reward trading card.

7. A gaming machine comprising:
a card reader which reads character data from at least one inserted trading card;
a card writer which writes updated character data on at least one reward trading card; and
a controller which executes a predetermined computer program, the controller being connected to the card reader and the card writer,
wherein the controller causes the card reader to read the character data from the at least one inserted trading card, causes a game to advance on a basis of the character data read by the card reader, and causes the card writer to write the updated character data on a basis of both a status of the game and the character data read by the card reader.

8. A method for controlling a gaming machine including a card reader and a card writer, comprising:
reading character data from at least one inserted trading card;
advancing a game based on the character data; and
writing updated character data to at least one reward trading card, the updated character data being on a basis of both a status of the game and the read character data.
